# EUROPÄISCHE PATENTSCHRIFT

(11) **EP 1 303 447 B1**
(45) Veröffentlichungstag und Bekanntmachung des Hinweises auf die Patenterteilung: **13.10.2004**
(21) Anmeldenummer: 01971761.0
(22) Anmeldetag: 09.07.2001
(51) Int. Cl.: B65G 1/00

(54) **VORRICHTUNG ZUM HANDHABEN VON STÜCKGÜTERN**
DEVICE FOR HANDLING UNIT LOADS
DISPOSITIF DE MANIEMENT DE STRUCTURES

(30) Priorität: 10.07.2000 DE 10033238; 18.12.2000 DE 10063136
(43) Veröffentlichungstag der Anmeldung: 23.04.2003
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2001/007896
(87) Internationale Veröffentlichungsnummer: WO 2002/004321

(56) Entgegenhaltungen:
- WO-A-97/48636
- AU-A- 2 203 770
- DE-U- 7 401 022
- US-A- 3 086 807
- US-A- 4 452 555

## Beschreibung

Die vorliegende Erfindung betrifft eine Vorrichtung, zum Greifen eines Stückgutes während einer Handhabung des Stückgutes, mit einem Befestigungsabschnitt zum Befestigen der Vorrichtung an dem Stückgut und einem Griffabschnitt zum Angreifen eines Handhabungsmittels.

Aus US-A-3,086,807 ist eine Vorrichtung zum Greifen eines Stückgutes mit den Merkmalen des Oberbegriffs des Anspruches 1 bekannt.

Zum Transport von Gütern werden seit langer Zeit sehr vorteilhaft genormte Container verwendet. Diese Container weisen an ihren Eckpunkten als Containerecken oder Twistblocks bezeichnete Einrichtungen auf, welche die dazwischen verlaufenden Seiten des Containers um ein gewisses Maß überragen. Weiterhin sind diese Containerecken so ausgebildet, dass standardisierte Haltevorrichtungen eingreifen können und in der Containerecke verriegelbar sind.

Güter mit großem Volumen (im Folgenden als Stückgüter bezeichnet) geben beträchtliche Probleme beim Handhaben oder Transportieren auf, sofern sie z.B. wegen Abmessung und/oder Gewicht nicht zum Transport in Containern geeignet sind. Solche Stückgüter sind z.B. Türme oder Turmsegmente aus Stahl, die als Träger für Telekommunikationseinrichtungen oder Windenergieanlagen oft zu transportieren sind. Solche Sektionen haben in der Regel Längen von 11 - 25 m, Durchmesser von bis zu 4 m und Massen zwischen 20 - 70 t. Diese Werte können sogar überschritten werden.

Im Folgenden werden die Probleme im Stand der Technik sowie die Erfindung mit Blick auf solche Stahlturmsegmente beschrieben. Es sei jedoch ausdrücklich darauf hingewiesen, dass die Erfindung nicht auf diese Anwendung beschränkt ist, sondern sich grundsätzlich auf alle Stückgüter bezieht.

Bekanntlich stellt sich für Stahlturm-Sektionen eine Reihe von Handhabungs- und Transportaufgaben, angefangen bei der Fertigung über den Transport zur Baustelle bis hin zum Errichten des Gebäudes.

An beiden Enden der zumeist kreiszylindrischen Turmsegmente sind umfänglich üblicherweise Flansche angebracht, an denen die einzelnen Sektionen beim Aufbau miteinander verbunden werden. Diese Flansche werden gewöhnlich auch verwendet, um die jeweils benötigten Handhabungs- oder Transporthilfsmittel an der Sektion anzubringen.

Dies sind z.B. in der Produktion zunächst Drehadapter, mittels derer sich die nach ihrer Längsachse horizontal ausgerichtete Sektion um die Längsachse drehen lässt, um z.B. Lackierarbeiten an jeder Stelle der Außenwand ausführen zu können. Diese Drehadapter werden an den Flanschen festgeschraubt.

Zum Beispiel nach diesem Vorgang werden Füße an die Flansche geschraubt, die eine Lagerung der Sektion mit einer vorgegebenen Bodenfreiheit gestatten. Sobald die Füße befestigt sind und die Sektion abgestellt ist, werden die Drehadapter abgenommen. Dabei werden Füße so positioniert, dass sie mit einer gewissen Wahrscheinlichkeit auch bei einem späteren LKW-Transport passen und nicht ummontiert werden müssen.

Der LKW-Transport selbst kann bei kleineren Sektionen auf einem Tieflader erfolgen. Bei größeren Sektionen ist jedoch eine sogenannte Kesselbrücke erforderlich. Eine solche Kesselbrücke besteht aus einem Motorwagen mit einem angebauten Auflieger und einem Nachläufer, die untereinander durch Holme verbunden sind und deren Abstand zueinander sich in gewissen Grenzen einstellen lässt. Für einen Transport mittels der Kesselbrücke müssen wiederum andere Füße an die Sektion geschraubt werden, die die Sektion auf den Holmen der Kesselbrücke in bestimmter Position lagern.

Sobald die Sektion die Baustelle erreicht hat, werden Hebe-Laschen am Flansch des Segmentes festgeschraubt, das nun zur Montage aufgerichtet werden soll. Sobald die Sektion mittels der Hebe-Laschen angehoben ist, werden die Füße vom Flansch gelöst, und die Sektion kann in den Aufbau des Turmes montiert werden.

Führt ein Teil des Transportweges über See, können die an den Sektionen befestigten Füße mit dem Deck des Schiffes verschweißt werden. Dazu wird ein erneutes Wechseln der Füße nötig, wenn die Sektion mit einer Kesselbrücke zum Hafen transportiert wurde. Das Verschweißen ist zwar eine ebenso einfache wie wirkungsvolle Transportsicherung, birgt aber die Gefahr von Beschädigungen der Sektion beim Löschen der Ladung - insbesondere, wenn nicht die Füße vom Deck des Schiffes gelöst, sondern einfach von den Flanschen der Sektion abgeschraubt werden. Darüber hinaus müssen für den LKW-Transport vom Hafen bis zur Baustelle die dann fehlenden bzw. zerstörten Füße wiederum durch neue ersetzt werden.

Alternativ zum Verschweißen der Füße mit dem Deck des Schiffes werden die Sektionen z.B. mit Ketten gesichert, die entweder durch das Lochbild der Sektion oder außen um die Sektion herum geführt und festgelegt werden. Um die schwere Sektion zuverlässig zu halten, werden die Ketten festgezurrt. Dies führt dann leicht z.B. zu Verformungen der Sektion oder Schäden an der Beschichtung. Steht im Zielhafen wiederum eine Kesselbrücke bereit, ist ein erneuter Wechsel der Füße erforderlich.

Die bekannten Vorrichtungen sind einstückig ausgebildet, und weisen zwei Abschnitte auf, von denen einer der Befestigung der Vorrichtung an dem Stückgut dient und der andere zur Betätigung bei der Handhabung (z.B. Heben oder Abstellen).

Bei den beschriebenen Vorrichtungen sind die häufigen, zeitraubenden, und daher auch kostenintensiven Umrüstungen zu den verschiedenen Trage-, Stütz- und Hebeabläufen während der Handhabung der Sektion bei der Herstellung und während des Transportes von gravierendem Nachteil. Denn jede Einrichtung ist im Wesentlichen nur für eine Aufgabe und nur für eine Funktion ausgebildet.

Eine Transportvariante zu Lande ist ein sogenanntes Transportkreuz. Dieses besteht aus einem Motorwagen und einem Nachläufer. Die Verbindung zwischen beiden Fahrzeugen stellt das Transportgut selbst her - also z.B. die Turm-Sektion. Dazu sind am Motorwagen und am Nachläufer jeweils Halteeinrichtungen angeordnet, die sich mit den Flanschen der Sektion verschrauben lassen.

Montage und Demontage der Sektion zwischen Motorwagen und Nachläufer dauert aber jeweils etwa nachteilige 2,5 bis 3 Stunden, während dessen die Sektion von einem Kran gehalten werden muss. Dadurch ist sowohl der Kran als auch das erforderliche Personal sehr lange blockiert.

Daher ist es Aufgabe der vorliegenden Erfindung, Handhabungsmittel für Stückgüter insbesondere für deren Produktion, Transport und Montage bereitzustellen, die universeller einsetzbar sind.

Diese Aufgabe wird erfindungsgemäß mit einer Vorrichtung gemäß Anspruch 1, mit einem Stückgut mit dem Merkmal nach Anspruch 5 und einem Transportfahrzeug mit dem Merkmal nach Anspruch 18 gelöst. Bevorzugte Ausgestaltungen sind in den Unteransprüchen angegeben.

Erfindungsgemäß ist ein Griffabschnitt einer Greifvorrichtung eines Stückgutes in der Form einer Containerecke, also einem Standard-Container-Verbindungsanschluss, ausgebildet. Da solche Containerecken die standardisierten Hebe- und Handhabungsschnittstellen von Containern sind und mit Containern weltweit ein beträchtlicher Teil jeglicher Militär- und Handelslogistik abgewickelt wird, stehen entsprechend weltweit alle erforderlichen Handhabungs- und Transporteinrichtungen zur Verfügung, um mit solchen Vorrichtungen bestückte Stückgüter handhaben und transportieren zu können.

In einer bevorzugten Ausführungsform der Erfindung weist ein Befestigungsabschnitt der erfindungsgemäßen Greifvorrichtung Befestigungsvorrichtungen auf, die entsprechend dem Stückgut ausgebildet sind, an dem die Vorrichtung befestigt werden soll. Weist das Stückgut z.B. Befestigungslöcher in einem Flansch auf, dann kann auch der Befestigungsabschnitt Befestigungsvorrichtungen z.B. in der Form von Durchgangslöchern aufweisen, die in ihren Abständen mit denen des Flansches übereinstimmen. So ist eine schnelle und unkomplizierte Befestigung der Vorrichtung an dem Stückgut sicher möglich.

In einer weiterhin bevorzugten Ausführungsform ist in der erfindungsgemäßen Greifvorrichtung eine Ausnehmung vorgesehen, die mit plattenförmigen Elementen versehen ist. Diese stehen in einem vorzugsweise rechten Winkel zueinander (und bevorzugt senkrecht zum plattenförmigen Grundkörper der Greifvorrichtung), so dass die Ausnehmung an zwei Seiten durch diese plattenförmigen Elemente begrenzt ist und die Gestalt einer Bucht hat. Zum Transport des Stückgutes mittels einer Kesselbrücke kann sich das Stückgut mit diesen Platten-bestückten Ausnehmungen auf den Holmen der Kesselbrücke abstützen, indem die Ausnehmungen die - üblicherweise parallelen - Holme formschlüssig umgreifen. Bei Holmen mit liegendem Recheckquerschnitt z.B. sind die Platten so ausgerichtet, dass jeweils eine horizontal auf einem Holm aufliegt und die jeweils anderen zur seitlichen Sicherung des Stückgutes an einander gegenüberliegenden Seiten der Holme anliegen.

In einer bevorzugten Ausgestaltung der Erfindung ist der Griffabschnitt von den Befestigungsvorrichtungen beabstandet, und im Bereich der Befestigungsvorrichtungen ist wenigstens eine zusätzliche Befestigungsvorrichtung vorgesehen, an der z.B. innerhalb des Umfangs des Stückgutes bei entsprechender Montage der erfindungsgemäßen Greifvorrichtung sich z.B. zusätzliche Verstrebungen befestigen lassen.

Weiterhin können an der erfindungsgemäßen Greifvorrichtung Ösen vorgesehen sein, an denen z.B. Planen zum Abdecken des Stückgutes befestigt werden können.

Weiterhin ist erfindungsgemäß ein Adapter zur Aufnahme eines Stückgutes vorgesehen, der einen Träger umfasst, an und/oder in dem Verbindungselemente angeordnet sind, die sich mit den als Container-Ecken ausgestalteten Griffabschnitten der erfindungsgemäßen Vorrichtungen verbinden lassen. Dadurch ist es zunächst möglich, bei sehr schweren Stückgütern über den Träger eine Verteilung der Gewichtskraft auf eine größere Fläche zu erreichen, indem der Träger z.B. eine eben gestaltete Auflagefläche aufweist.

In einer bevorzugten Ausführungsform weist der Adapter vier Verbindungselemente auf, die an dem Träger, vorzugsweise in Gestalt eines geraden Balkens, nebeneinander angeordnet sind und von denen wenigstens zwei einen bestimmten Abstand zueinander aufweisen. Sofern der Abstand zwischen diesen Verbindungselementen erfindungsgemäß z.B. einem Container-Standardmaß entspricht, gestatten diese zwei fest beabstandeten Verbindungselemente eine Befestigung des Adapters in standardisierten Haltern wie z.B. auf Container-Lkw oder auf Containerdecks von Schiffen.

Die verbleibenden Verbindungselemente können auf einen Abstand eingerichtet sein oder sogar eingestellt werden, der eine Befestigung von Stückgütern mit erfindungsgemäßen Greifvorrichtungen in einem anderen Abstand als dem Abstand zwischen den Standardhaltern erlaubt. Weisen dabei die äußeren Verbindungselemente den Standardabstand auf, können die inneren Verbindungselemente ein Stückgut mit Greifvorrichtungen in einem geringeren als dem Standardabstand halten. Weisen die inneren Verbindungselemente einen Standardabstand auf, dann halten die äußeren Verbindungselemente das Stückgut, das mit Vorrichtungen in einem größeren als dem Standardabstand ausgerüstet ist.

Alternativ weisen sämtliche Verbindungselemente vorgegebene Abstände zueinander auf, so dass der Adapter für bestimmte Stückgüter bzw. Stückgüter mit bestimmten Abmessungen eingerichtet und ohne erforderliche Anpassungsmaßnahmen sofort einsetzbar ist.

Die Erfindung betrifft weiterhin ein Transportmittel mit einer Zugmaschine und einem Nachläufer, wobei Zugmaschine und Nachläufer während des Transportes durch das Stückgut miteinander verbunden sind, und wobei Zugmaschine und Nachläufer an ihren einander zugewandten Enden Haltevorrichtungen für das Stückgut aufweisen.

Dabei ist das Transportmittel bevorzugt so ausgebildet, dass die Haltevorrichtungen bestimmte Verbindungselemente, sogenannte Container-Knaggen, aufweisen, an denen das Stückgut mit den daran angebrachten erfindungsgemäßen Greifvorrichtungen schnell und einfach und damit auf einfache Weise an dem Transportmittel befestigt werden kann.

Das Transportmittel kann fest vorgegebene Abständen zwischen den Container-Knaggen aufweisen, oder die Haltevorrichtungen können in ihrer Höhe und/oder in ihrer Breite zueinander verstellbar sein. Die Container-Knaggen sind dann an den verstellbaren Abschnitten der Haltevorrichtungen angebracht. Das Verstellen der Haltevorrichtung erfolgt insbesondere bevorzugt hydraulisch, so dass eine Anpassung an die Abmessungen des Transportgutes leicht möglich ist.

Vorzugsweise besitzt das Transportfahrzeug für ein Stückgut mit einer Zugmaschine und einem Nachläufer an den einander zugewandten Enden der Zugmaschine und des Nachläufers miteinander korrespondierende Verbindungselemente. Deren Anordnung ist so aneinander angepasst, dass die Zugmaschine und der Nachläufer sich direkt miteinander verbinden lassen. Wenn also das Transportfahrzeug nicht mit einem Stückgut beladen ist (und also kein Stückgut die Verbindung zwischen der Zugmaschine und dem Nachläufer herstellt), sind die Zugmaschine und der Nachläufer durch die erfindungsgemäßen Verbindungselemente so miteinander verbunden, dass die daraus entstehende Einheit fahren kann. Auf diese Weise bildet sich erfindungsgemäß vorteilhaft eine fahrbare Einheit mit der geringst möglichen Länge, die aufgrund der im wesentlichen starren Verbindung zwischen der Zugmaschine und dem Nachläufer wie ein einziges Fahrzeug einfach manövrierbar ist - und nicht schwierig manövrierbar wie gemäß dem Stand der Technik der Motorwagen mit dem durch die Zugstange verbundenen Nachläufer als Anhänger.

Die Verbindungselemente können horizontal in Fahrtrichtung orientierte Holme aufweisen, die zur Verbindung der Zugmaschine und des Nachläufers übereinander zu liegen kommen mit vorzugsweise ebenen Flanschflächen, die z.B. horizontal sein können. Zur Sicherung können die Verbindungselemente einerseits Zapfen aufweisen, die andererseits in entsprechende Bohrungen mit Spielpassung eingreifen. Derartig formschlüssige Verbindungselemente sind erfindungsgemäß bevorzugt, denn sie lassen sich besonders schnell fügen. Und eine Sicherung einer insgesamt starren Verbindung zwischen dem Motorwagen und dem Nachläufer lässt sich dann vorzugsweise durch Spannelemente wie z.B. einfache Spannratschen oder Spanngurte oder Gewindespanner herstellen, die zwischen der Zugmaschine und dem Nachläufer z.B. an Ösen anbringbar sind und den Motorwagen und den Nachläufer aufeinander zu spannen können, auch so, dass in dem Beispiel die formschlüssige Verbindung gegen Lösen gesichert ist.

Weitere vorteilhafte Ausführungsformen der Erfindung sind im Folgenden zu den beigefügten Figuren beschrieben. Dabei zeigen:

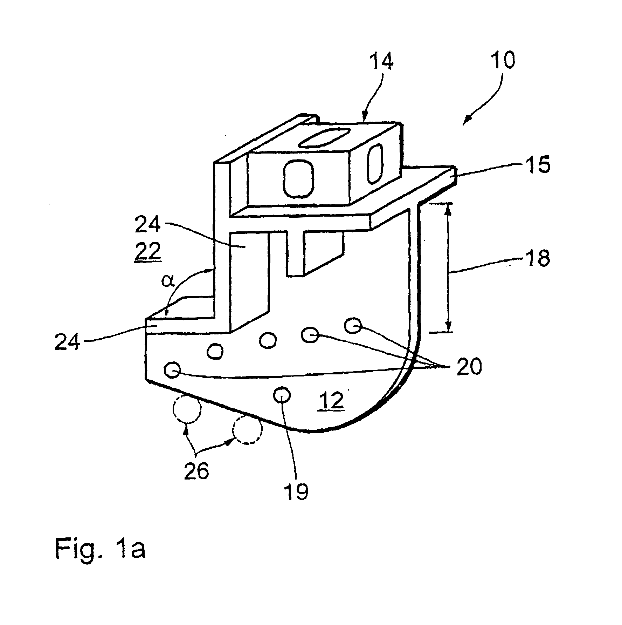

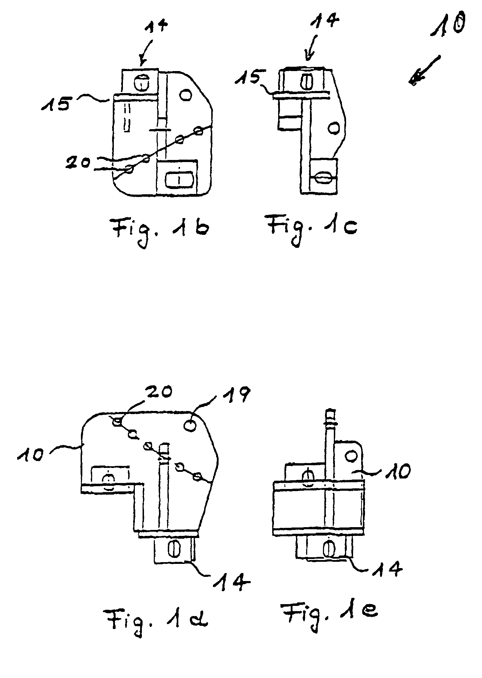

- Fig. 1a: eine räumliche Darstellung einer erfindungsgemäßen Greifvorrichtung;
- Fig. 1a-b: Vordersicht und Seitenansicht einer alternativen Ausführungsform einer erfindungsgemäßen Greifvorrichtung;
- Fig. 1c-d: Vordersicht und Seitenansicht einer weiteren alternativen Ausführungsform einer erfindungsgemäßen Greifvorrichtung;
- Fig. 2: eine räumliche Darstellung einer weiteren alternativen erfindungsgemäßen Greifvorrichtung;
- Fig. 3: eine Draufsicht auf einen erfindungsgemäßen Adapter;
- Fig. 4: eine Vordersicht eines Satzes der erfindungsgemäßen Greifvorrichtungen mit dem erfindungsgemäßen Adapter an zwei Turmsegmenten als Transportgut;
- Fig. 5: zwei Seitenansichten eines erfindungsgemäßen Transportfahrzeuges mit und ohne Transportgut;
- Fig. 6: eine Rückansicht einer erfindungsgemäßen Haltevorrichtung des Transportfahrzeuges;
- Fig. 7: eine entlang der Linie A - A in Fig. 6 geschnittene Draufsicht einer erfindungsgemäßen Haltevorrichtung des Transportfahrzeuges;
- Fig. 8: eine Seitenansicht einer erfindungsgemäßen Haltevorrichtung des Transportfahrzeuges und
- Fig. 9: eine Seitenansicht der Halterungsvorrichtungen einer Zugmaschine und eines Nachläufers für ein Stückgut in erfindungsgemäßer Verbindung.

Fig. 1a zeigt eine erste Ausführungsform einer erfindungsgemäßen Greifvorrichtung 10 in räumlicher Ansicht. Die Vorrichtung 10 weist einen Befestigungsabschnitt 12 und einen daran anschließenden Griffabschnitt 14 auf. Der Befestigungsabschnitt 12 hat Bohrungen 20 als Befestigungsvorrichtungen, mit denen sich die Greifvorrichtung 10 in bestimmter Position am Stückgut 16 (in dieser Figur nicht dargestellt) bevorzugt durch Schraubverbindungen befestigen lässt.

Ein wesentliches Merkmal ist dabei die räumliche Orientierung, insbesondere die Distanz 18 zwischen den Befestigungsvorrichtungen 20 und dem Griffabschnitt 14, da sich daraus z.B. auch der Abstand des Stückgutes 16 (in dieser Figur nicht dargestellt) zu einem ebenen Grund ergibt, wenn das Stückgut mit einem Satz Greifvorrichtungen 10 als Füße auf dem Boden abgestellt ist.

Da auch hier in der Figurenbeschreibung die Erfindung mit ihren Vorteilen am Beispiel einer kreiszylindrischen Sektion 16 eines Stahlturmes mit kreisringförmigen Flanschen an beiden Enden dargestellt wird, sind die Befestigungsvorrichtungen 20 (Durchgangslöcher) daran angepasst in einem Muster mit gekrümmter Mittellinie angeordnet. So kann bei übereinstimmendem Lochabstand die erfindungsgemäße Vorrichtung 10 an einem Flansch der Sektion 16 befestigt werden.

Der Griffabschnitt 14 ist erfindungsgemäß eine sogenannte Containerecke. Diese Containerecke ist auf einer Stützplatte 15 befestigt. Da kein Element der Greifvorrichtung die Containerecke überragt, kann diese sowohl als Hebepunkt für entsprechende Hebemittel wie Containerbrücken oder Container-Spreader als auch als Fuß zum Absetzen des Stückgutes dienen.

Wegen der Möglichkeit, standardisierte Befestigungsmittel für Container zu verwenden, ist ein Verschweißen z.B. mit einem Schiffsdeck nicht mehr erforderlich. Ebenso kann auf ein Festzurren mit Ketten zur Sicherung während eines Schiffstransportes verzichtet werden.

In einer Ausnehmung 22 des Befestigungsabschnittes 12 sind zwei Platten 24 angebracht. Diese Platten weisen zueinander einen rechten Winkel α auf und bilden die seitliche Begrenzung der Ausnehmung 22. Dabei verlaufen die Platten jeweils senkrecht zu der Fläche des Befestigungsabschnittes 12. Auf diese Weise können die erfindungsgemäßen Vorrichtungen als Satz auch darauf angepasst sein, das Stückgut 16 auf einer Kesselbrücke abzusetzen und dort die Trägerholme der Kesselbrücke formschlüssig zu umgreifen.

Fig. 1b - e zeigen alternative Ausgestaltungen einer Greifvorrichtung 10. Die zu Fig. 1a beschriebenen Merkmale sind hier - z.B. in Anpassung an ein anders dimensioniertes und/oder gestaltetes Transportgut (nicht dargestellt) - anders proportioniert und zueinander positioniert. Fig. 1c ist die Seitenansicht der Fig. 1b und Fig. 1e stellt die Seitenansicht der Fig. 1d dar, wobei die Fig. 1b und 1d jeweils Vorderansichten darstellen.

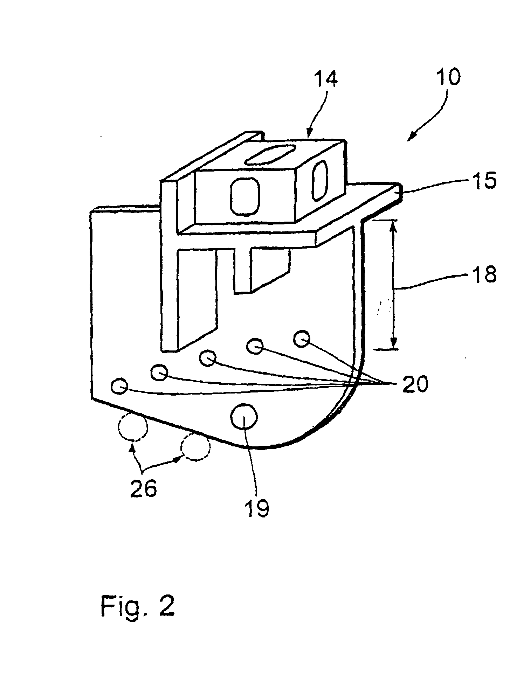

Fig. 2 zeigt noch eine weitere Ausführungsform einer erfindungsgemäßen Vorrichtung. Ein wesentlicher Unterschied zu der in Figur 1a dargestellten Vorrichtung besteht darin, dass die Ausnehmung 22 (wie schon gemäß Fig. 1b - c) nicht ausgebildet ist. Außerdem ist der Abschnitt zwischen dem Befestigungsabschnitt und der Griffabschnitt verkürzt ausgeführt. Diese Ausführungsform ist daher nicht als Fuß zum Abstellen des Stückgutes auf ebenem Grund einsetzbar, wenn bei gleicher Befestigungsposition der Greifvorrichtungen und gleichem Durchmesser des Stückgutes dessen Außenkontur über eine gedachte Verbindungslinie zwischen den Griffabschnitten von je zwei Greifvorrichtungen hinausragt. Die Vorrichtung kann jedoch ohne weiteres als Hebepunkt für das Stückgut verwendet werden, wenn sie an einem oberen Rand des Stückgutes angebracht wird.

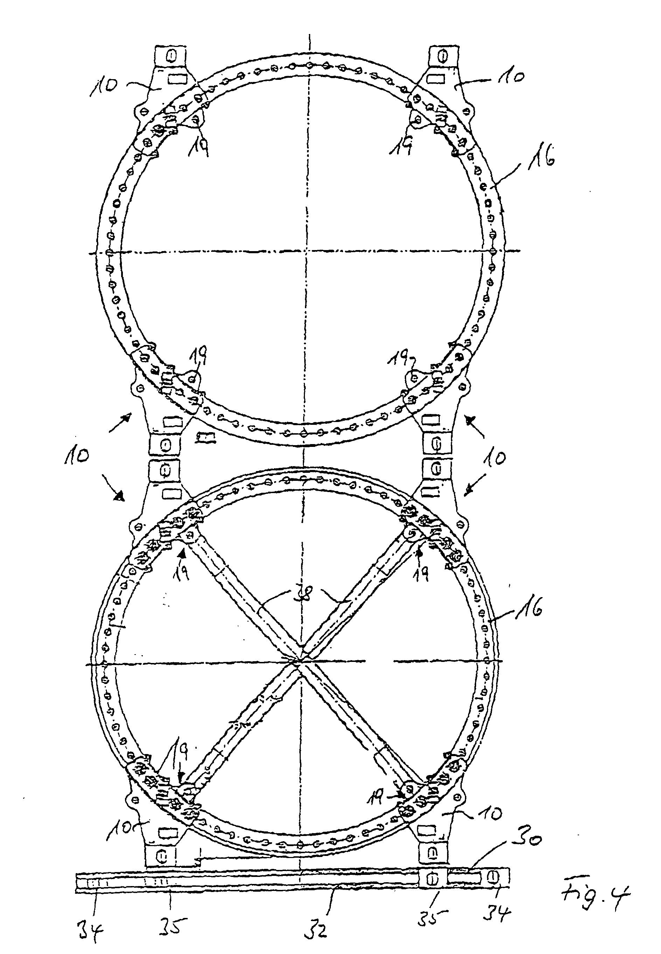

Die in Fig. 1 und Fig. 2 gezeigten Vorrichtungen 10 weisen an oder in ihren ersten Abschnitten 12 jeweils eine zusätzliche Befestigungsvorrichtung 19 auf. Sie ist hier als Durchgangsloch ausgebildet, und es können daran weitere Einrichtungen, z.B. Versteifungsstreben befestigt werden (vgl. Fig. 4).

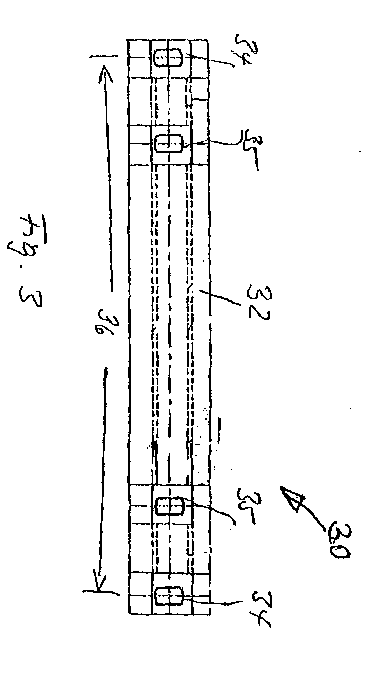

In Fig. 3 ist ein erfindungsgemäßer Adapter 30 mit insgesamt vier Containerecken als äußeren Verbindungselementen 34 und inneren Verbindungselementen 35 an einem Träger 32 gezeigt. Diese äußeren und inneren Verbindungselemente 34, 35 liegen in ihren Positionen an dem Träger 32 fest. Dabei entspricht der Abstand 36 zwischen den beiden äußeren Containerecken 34 von Mitte zu Mitte dem Standardmaß von 2260 mm. DerAbstand zwischen den inneren Verbindungselementen 35 ist geringer. Somit können Stückgüter, bei denen wegen geringerer Abmessungen die erfindungsgemäßen Greifvorrichtungen 10 in einem geringeren Abstand als dem Standardmaß von 2260 mm angebracht sind, mittels des Adapters 30 ebenfalls mit standardisierten Einrichtungen zum Containerumschlag und Transport gehandhabt und transportiert werden.

Alternativ können bei einem längeren Träger 32 die inneren Verbindungselemente 35 den Standardabstand von 2260 mm aufweisen und die äußeren Verbindungselemente 34 können dann Stückgüter aufnehmen, die eine Montage der erfindungsgemäßen Greifvorrichtungen 10 nur außerhalb dieses Standardmaßes zulassen.

In Fig. 4 ist eine Anwendung der erfindungsgemäßen Vorrichtungen 10 und eines erfindungsgemäßen Adapters 30 gezeigt. Die als Stückgüter 16 dargestellten Sektionen eines Stahlturmes sind mit einem Satz Greifvorrichtungen 10 versehen und übereinander gestapelt. Wegen des relativ "kleinen" Durchmessers ist eine Montage der Vorrichtungen 10 mit einem Abstand von 2260 mm zwischen den Mitten der Containerfüße 14 der Vorrichtungen 10 nicht möglich. Die Vorrichtungen 10 werden in einem geringeren Abstand angebracht.

Um trotzdem die Einrichtungen und Transportmittel vorteilhaft nutzen zu können, die auf das Standardmaß eingerichtet sind, ist zusätzlich unter der unteren Sektion ein Adapter 30 vorgesehen. Der ist so eingerichtet, dass die inneren Verbindungselemente 35 den gleichen Abstand aufweisen, wie die Vorrichtungen 10 an der unteren Sektion. Die äußeren Verbindungselemente 34 weisen den Standardabstand auf und gestatten somit die Nutzung vorhandener Einrichtungen und Transportmittel.

Um eine sichere mechanische Verbindung zwischen den Containerecken 14 der an der unteren Sektion angebrachten Greifvorrichtungen 10 des Satzes und des Adapters sowie zwischen den Containerecken der unteren Sektion und denen der oberen Sektion herzustellen, werden wiederum standardisierte Verbindungselemente (nicht dargestellt) verwendet, die auch bei herkömmlichen Containern deren Container-Ecken direkt miteinander verbinden.
In der unteren Sektion sind zwischen den jeweils diagonal gegenüberliegenden zusätzlichen Befestigungsvorrichtungen 19 der einzelnen Greifvorrichtungen 10 Stützen angebracht, die eine Verformung der unteren Sektion unter der Last der oberen Sektion verhindern.

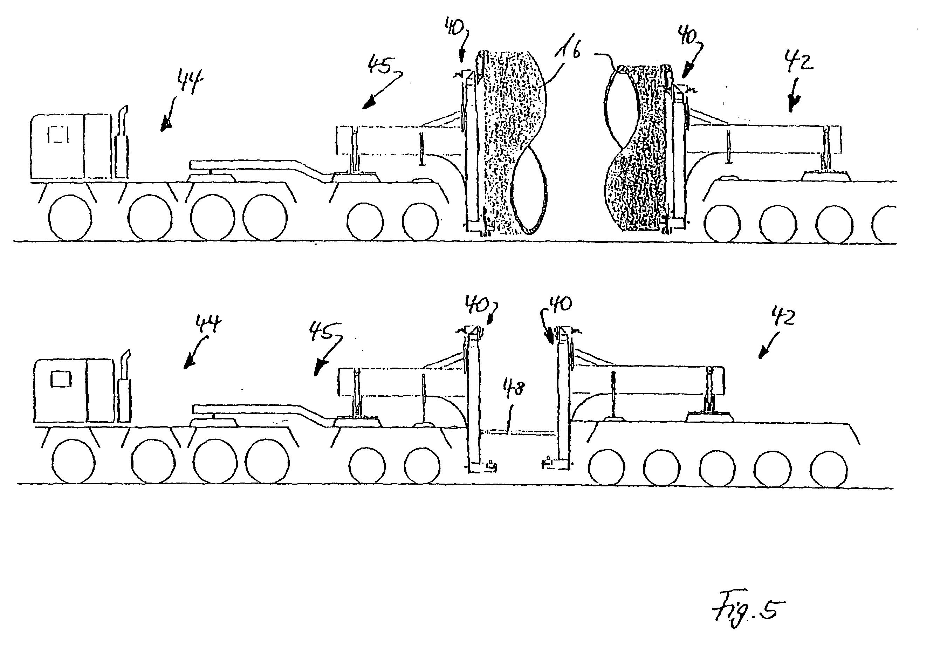

Fig. 5 zeigt ein erfindungsgemäßes Transportmittel mit einer Zugmaschine 44, einem Auflieger 45 und einem Nachläufer 42. An den einander zugewandten Seiten des Aufliegers 45 und des Nachläufers 42 sind Haltevorrichtungen 40 angeordnet, die das Stückgut 16 während des Transportes tragen. Dabei wird die Verbindung zwischen dem Auflieger 45 und dem Nachläufer 42 durch das Stückgut 16 hergestellt.

Für eine Fahrt ohne Transportgut werden der Auflieger 45 und der Nachläufer 42 mit einer Zugstange 48 verbunden, die in entsprechende Kupplungen am Auflieger 45 und am Nachläufer 42 eingreift (Fig. 5, unten).

In Fig. 9 ist rechts ein horizontaler Trägerholm des Fahrwerks eines alternativen Transportmittels mit einer Zugmaschine 102 und links ein horizontaler Trägerholm des Fahrwerks eines zugehörigen Nachläufers 104 erkennbar, die aufeinander zu in jeweiligen Haltevorrichtungen 106, 108 für ein Stückgut (nicht dargestellt) enden. An ihrem unteren Ende haben die Haltevorrichtungen 106, 108 horizontal aufeinander vorspringende Holme, die in Fahrtrichtung aufeinander zuweisen. (110, 112) Die Holme 110, 112 dienen (ebenso wie die Containerknaggen 113 am oberen Ende der Haltevorrichtungen 106, 108) zum Einen der Verbindung mit einem Stückgut (nicht dargestellt), wenn die Zugmaschine 102 und der Nachläufer 104 mit dem Stückgut beladen sind, und zum Anderen in dem dargestellten unbeladenen Zustand der direkten Verbindung zwischen der Zugmaschine 102 und dem Nachläufer 104. Die Holme 110, 112 sind als miteinander korrespondierende Verbindungselemente jeweils so an der Haltevorrichtung 106 und 108 angeordnet, dass sie in dem direkt miteinander verbundenen Zustand übereinander zu liegen kommen und mit deckungsgleich aufeinander liegenden horizontalen Flanschflächen 114 verbunden sind.

Die Holme 110, 112 weisen als zusammenwirkende formschlüssige Verbindungsstruktur einerseits einen Zapfen 116 auf der Flanschfläche 114 des Holmes 110 auf, der in der dargestellten gefügten Position eingreift in eine Bohrung 116 in der Flanschfläche 114 des Holmes 112. Diese formschlüssige Verbindung 116 ist gesichert durch zwei Spannelemente 118, die zwischen Ösen 120 an den Haltevorrichtungen 106, 108 so gespannt sind, dass die Zugmaschine 102 und der Nachläufer 104 gegeneinander verspannt starr miteinander verbunden sind.

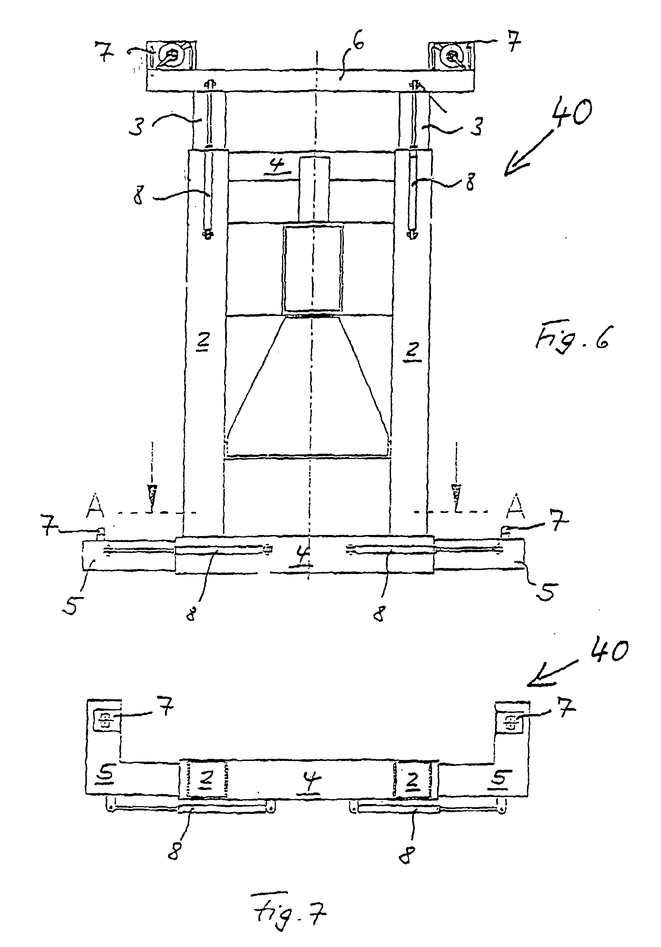

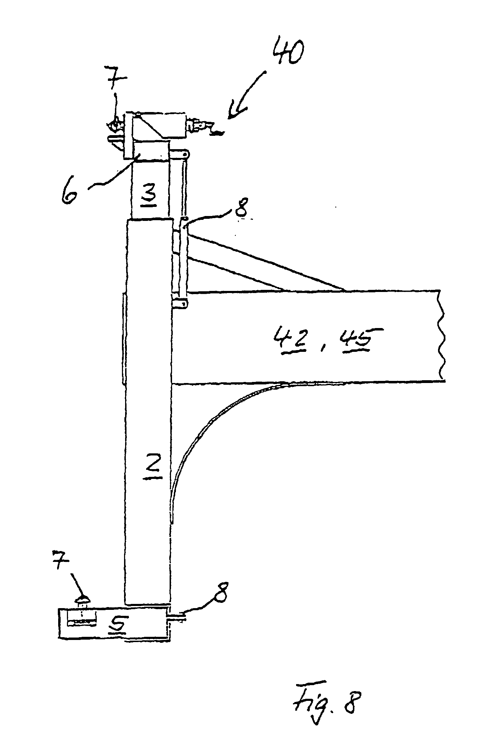

In Fig. 6 ist die Haltevorrichtung 40 aus Fig. 5 in Gestalt eines vertikal verlaufenden Grundrahmens mit zwei vertikalen Pfosten 2 und zwei horizontalen Traversen 4 genauer erkennbar. In der unteren Traverse 4 sind beidseitig Ausleger 5 mit Hydraulikzylindern 8 in Richtung der Traverse 4 (horizontal seitlich) teleskopisch ein- und ausfahrbar. Und in den Pfosten 2 befinden sich Pfostenverlängerungen 3, die ebenfalls mit Hilfe hydraulischer Zylinder 8 in Längsrichtung der Pfosten 2 (vertikal nach oben) ein- und ausfahrbar sind. Auf den Pfostenverlängerungen 3 dann liegt ein Querbalken 6, an dessen äußeren Enden Container-Knaggen 7 - standardisierte Vorrichtungen zum schnellen Verbinden mit Container-Ecken - angebracht sind. Weitere Container-Knaggen 7 befinden sich an den Enden der horizontal seitlich ausfahrbaren Ausleger 5. Deren Positionen sind besonders in Fig. 7 gut erkennbar.

Aus Fig. 7 geht auch deutlich hervor, dass die Ausleger 5 in ihrem äußeren Bereich in einem rechten Winkel zu dem jeweiligen Ausleger 5 auf die am Transportfahrzeug jeweils gegenüberliegende Haltevorrichtung 40 zu verlaufen. Auf diesen abgewinkelten Abschnitten der Ausleger 5 sind die Container-Knaggen 7 angeordnet, so dass also ein Betätigen der unteren Hydraulikzylinder 8 eine seitliche Verschiebung der unteren Container-Knaggen 7 bewirkt. Dadurch kann die erfindungsgemäße Haltevorrichtung 40 auf die Breite bzw. den Abstand der Vorrichtungen 10 an dem Stückgut 16 eingestellt werden.

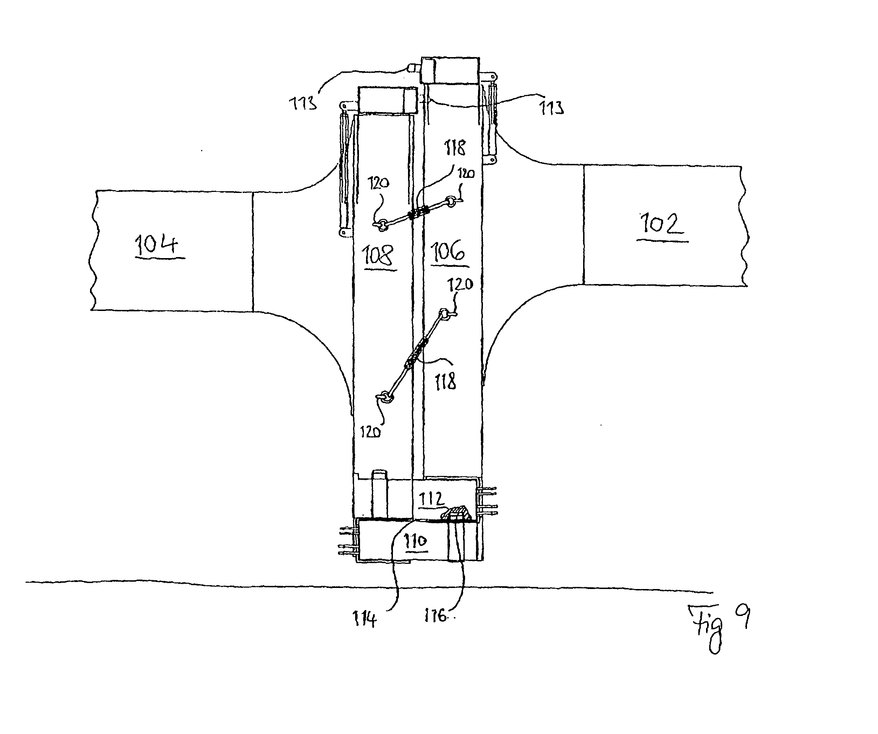

Auch die Seitenansicht in Fig. 8 zeigt die Haltevorrichtung 40 an dem Auflieger 45 bzw. dem Nachläufer 42. In dieser Darstellung ist gut erkennbar, dass ein Betätigen der oberen Hydraulikzylinder 8 ein Verfahren der Pfostenverlängerungen 3 und damit ein Verändern der Höhe der oberen, auf dem Querbalken 6 angeordneten Container-Knaggen 7 bewirkt.

Der Querbalken 6 kann auch mehrere seitlich nebeneinander liegende Container-Knaggen 7 aufweisen oder auch in dieser Richtung eine teleskopische Verstellung ermöglichen, so dass neben einer hydraulischen (oder pneumatischen) Höhenverstellung auch die horizontal seitliche Position der oberen Container-Knaggen 7 an das Transportgut anpassbar ist.

## Patentansprüche

1. Vorrichtung zum Greifen eines Stückgutes, wobei die Vorrichtung einen Befestigungsabschnitt zum Befestigen der Vorrichtung an dem Stückgut und einen Griffabschnitt zum Griff durch ein Handhabungsmittel aufweist,
**dadurch gekennzeichnet, dass** der Griffabschnitt (14) in Form einer Container-Ecke ausgebildet ist, dass der Befestigungsabschnitt (12) an die Gestalt eines bestimmten Stückgutes (16) angepasst ist, dass der Befestigungsabschnitt (12) mindestens eine Befestigungsvorrichtung (20) aufweist, die an eine bestimmte Verbindungsvorrichtung an dem Stückgut angepasst ist, dass der Befestigungsabschnitt (12) mindestens zwei Bohrungen (20) aufweist, und dass der Befestigungsabschnitt (12) einschließlich des Durchmessers und Abstandes der Bohrungen an eine bestimmte, einen Flansch aufweisende Verbindungsvorrichtung an dem Stückgut (16) angepasst ist, die ein bestimmtes Muster von Bohrungen aufweist.

2. Vorrichtung nach Anspruch 1,
**dadurch gekennzeichnet, dass** die Befestigungsvorrichtung (20) aus wenigstens zwei Bohrungen besteht und die Bohrungen einschließlich ihres Durchmessers und Abstands zueinander an die bestimmte Verbindungsvorrichtung an dem Stückgut angepasst sind.

3. Vorrichtung nach Anspruch 1 oder 2,
**dadurch gekennzeichnet, dass** das Bohrungsmuster der Befestigungsvorrichtung kreisbogenförmig, kreisringförmig oder kreissegmentförmig ausgebildet ist.

4. Vorrichtung nach einem der vorstehenden Ansprüche,
**gekennzeichnet durch** Ösen (26) im Bereich des Befestigungsabschnltts (12).

5. Stückgut mit wenigstens zwei daran angebrachten Vorrichtungen nach einem der vorhergehenden Ansprüche,
**dadurch gekennzeichnet, dass** die Vorrichtungen (10) so an das Stückgut oder mindestens an Elemente des Stückguts angepasst und daran befestigt sind, dass jeweils mindestens zwei Container-Ecken der an dem Stückgut befestigten Vorrichtung (10) kantenparallel zueinander ausgerichtet sind.

6. Stückgut nach Anspruch 5,
**dadurch gekennzeichnet, dass** mindestens drei der Vorrichtungen (10) so an das Stückgut oder mindestens ein Element des Stückguts angepasst und daran befestigt sind, dass jeweils mindestens drei Container-Ecken mit der an dem Stückgut befestigten Vorrichtung (10) so ausgerichtet sind, dass sie In einer Ebene liegen.

7. Stückgut nach einem der Ansprüche 5 oder 6,
**dadurch gekennzeichnet, dass** mindestens drei Vorrichtungen (10) so an das Stückgut oder mindestens ein Element des Stückguts angepasst und daran befestigt sind, dass das Stückgut die Ebene nicht durchdringt.

8. Stückgut nach einem der Ansprüche 5 bis 7,
**dadurch gekennzeichnet, dass** mindestens drei Vorrichtungen (10) so an das Stückgut oder mindestens ein Element des Stückguts angepasst und daran befestigt sind, dass der Schwerpunkt des Stückgutes innerhalb einer Fläche liegt, die die an der Ebenen ausgerichteten Container-Ecken aufspannen.

9. Stückgut nach einem der Ansprüche 5 bis 8,
**dadurch gekennzeichnet, dass** mindestens zwei der Vorrichtungen (10) jeweils durch eine Strebe (38) miteinander verbunden sind.

10. Stückgut nach Anspruch 9,
**dadurch gekennzeichnet, dass** die Strebe (38) mit den Vorrichtungen (10) durch eine zusätzliche Befestigungsvorrichtung (19) lösbar verbunden ist.

11. Stückgut nach einem der vorhergehenden Ansprüche 5-10,
**dadurch gekennzeichnet, dass** mindestens zwei der Vorrichtungen (10) so an das Stückgut oder mindestens ein Element des Stückguts angepasst und daran befestigt sind, dass die Position der Container-Ecken der an dem Stückgut befestigten Vorrichtung (10) einem Muster von Abmessungen entspricht, dass für Handhabungsmittel von Containern standardisiert ist.

12. Stückgut nach einem der vorhergehenden Ansprüche 5-11,
**gekennzeichnet durch** mindestens ein zusätzliches Adapterteil mit einem Träger (32), an dem mindestens zwei Verbindungselemente (34), die jeweils zum Angreifen an der Container-Ecke angepasst sind, sowie zwei Container-Ecken angeordnet sind, deren Position zueinander einem Muster von Abmessungen entspricht, das für Handhabungsmittel von Containern standardislert ist,
und ferner **gekennzeichnet dadurch, dass** die Anordnung der zwei Verbindungselemente so an das Stückgut oder mindestens an Elemente des Stückguts einschließlich mindestens zweier der daran angepassten und befestigten Vorrichtung (10) angepasst ist, dass die Container-Ecken der am Stückgut befestigten Vorrichtung (10) für die zwei Verbindungselemente greifbar sind.

13. Stückgut nach Anspruch 12,
**dadurch gekennzeichnet, dass** mindestens eines der Verbindungselemente (34) an dem Träger (32) verschiebbar ist.

14. Stückgut nach einem der Ansprüche 5 bis 13,
**dadurch gekennzeichnet, dass** mindestens vier der Vorrichtungen (10) jeweils eine buchtförmige Ausnehmung (22) aufweisen und dass die mindestens vier Vorrichtungen (10) so an das Stückgut oder mindestens an Elemente des Stückgutes angepasst und daran befestigt sind, dass die Ausnehmungen der an dem Stückgut befestigten Vorrichtung (10) so ausgerichtet sind, das die Ausnehmungen zwei zueinander parallele, zylinderförmige Freiräume (ohne Hinterschneidung) umgreifen.

15. Stückgut nach Anspruch 14,
**dadurch gekennzeichnet, dass** die Ausnehmungen (22) erste und zweite plane Wandungsabschnitte (24) aufweisen, die in einem Winkel α zueinander angeordnet sind und dass die mindestens vier Vorrichtungen (10) so an das Stückgut oder mindestens an Elemente des Stückguts angepasst und daran befestigt sind, dass die ersten planen Wandungsabschnitte aller mindestens vier Ausnehmungen der an dem Stückgut befestigten Vorrichtung (10) so ausgerichtet sind, dass sie in einer Ebene liegen.

16. Stückgut nach Anspruch 15,
**dadurch gekennzeichnet, dass** α ein rechter Winkel ist.

17. Stückgut nach einem der Ansprüche 5 bis 16,
**dadurch gekennzeichnet, dass** das Stückgut ein Rohrabschnitt ist mit einem Flansch an jedem Rohrende.

18. Transportfahrzeug für ein Stückgut, wobei das Fahrzeug eine Zugmaschine und eine Nachläufer aufweist, die während des Stückguttransportes durch das Stückgut miteinander verbunden sind, wobei Zugmaschine und Nachläufer einander zugewandte Haltevorrichtungen für das Stückgut aufweisen und am Stückgut in Verbindungsbereichen zwischen Stückgut und Zugmaschine einerseits und Stückgut und Nachläufer andererselts jeweils wenigstens zwei Vorrichtungen nach einem der vorhergehenden Ansprüche 1 bis 3 am Stückgut befestigt sind,
**dadurch gekennzeichnet, dass** die Haltevorrichtungen der Zugmaschine und des Nachläufers Container-Riegel (Container-Knaggen) (42) aufweisen und dass die Anordnung der Container-Knaggen (42) so an das Stückgut oder mindestens an Elemente des Stückguts mit daran angepassten befestigten Vorrichtungen (10) angepasst ist, dass die Container-Ecken der am Stückgut befestigten Vorrichtungen für die Container-Knaggen (42) greifbar sind.

19. Transportfahrzeug nach Anspruch 18,
**dadurch gekennzeichnet, dass** die Container-Knaggen (42) an teleskopartig verstellbaren Abschnitten der Haltevorrichtung (40) angebracht sind und dass daran die Höhe und/oder die seitliche Position der Container-Knaggen (42) einstellbar ist.

20. Transportfahrzeug nach Anspruch 19,
**dadurch gekennzeichnet, dass** die Haltevorrichtung (40) zwei senkrecht angeordnete Holme (2) und zwei waagerecht angeordnete Traversen (4) aufweist, die in einer senkrechten Ebenen angeordnet sind und dass an jedem Ende der unteren Traverse sowie an den oberen Enden der beiden Holme je einer der Abschnitte teleskopartig ein- und ausfahrbar ist, mit jeweils einer Container-Knagge (42) am Ende des Abschnittes.

21. Transportfahrzeug nach einem der Ansprüche 18 bis 20,
**dadurch gekennzeichnet, dass** die Zugmaschine (102) und der Nachläufer (104) an ihren einander zugeordneten Enden miteinander korrespondierende Verbindungselemente (110, 112, 114, 116, 118, 120) aufweisen, deren Anordnung so aufeinander abgestimmt ist, dass die Zugmaschine (102) und der Nachläufer (104) sich ohne das Stückgut fahrbar verbinden lassen.

22. Transportfahrzeug nach Anspruch 21,
**dadurch gekennzeichnet, dass** die Verbindungselemente horizontal in Fahrtrichtung welsende Holme (120, 112) aufweisen, die zur Verbindung der Zugmaschine (102) und des Nachläufers (104) übereinander zur Anlage kommen.

23. Transportfahrzeug nach einem der Ansprüche 18 bis 22,
**dadurch gekennzeichnet, dass** mindestens Teile der Haltevorrichtungen (106, 108, 110, 112) mindestens tellweise die Verbindungselemente (110, 112) bilden.

24. Transportfahrzeug nach Anspruch 23,
**dadurch gekennzeichnet, dass** die Haltevorrichtungen (106, 108) Container-Knaggen (113) aufweisen.

25. Transportfahrzeug nach einem der Ansprüche 20 bis 24,
**dadurch gekennzeichnet, dass** die Verbindungselemente Verriegelungselemente (116) zum Verriegeln der Verbindung aufweisen.

26. Transportfahrzeug nach Anspruch 25,
**dadurch gekennzeichnet, dass** die Verbindungselemente Spannelemente (118) zum Spannen der Zugmaschine (102) und des Nachläufers (104) gegeneinander aufweisen.

## Claims

1. Device for gripping a unit load, the said device comprising an attachment portion for attaching the device to the unit load and a gripping portion for gripping by a handling means, **characterized in that** the gripping portion (14) is embodied in the form of a container corner, **in that** the attachment portion (12) is adapted to the shape of a certain unit load (16), **in that** the attachment portion (12) comprises at least one attachment device (20) which is adapted to a certain connecting device on the unit load, **in that** the attachment portion (12) has at least two holes (20), and **in that** the attachment portion (12), including the diameter and spacing of the holes, is adapted to a certain connecting device on the unit load (16), the connecting device having a flange and a certain pattern of holes.

2. Device according to Claim 1, **characterized in that** the attachment device (20) comprises at least two holes, and the holes, including their diameter and spacing from one another, are adapted to the certain connecting device on the unit load.

3. Device according to Claim 1 or 2, **characterized in that** the pattern of holes of the attachment device is embodied in the form of a circular arc, circular ring or circular segment.

4. Device according to one of the preceding claims, **characterized by** eyes (26) in the region of the attachment portion (12).

5. Unit load having at least two devices attached to it according to one of the preceding claims, **characterized in that** the devices (10) are adapted to the unit load or at least to elements of the unit load and attached thereto in such a manner that in each case at least two container corners of the device (10) attached to the unit load are orientated with their edges parallel to one another.

6. Unit load according to Claim 5, **characterized in that** at least three of the devices (10) are adapted to the unit load or to at least one element of the unit load and are attached thereto in such a manner that in each case at least three container corners of the device (10) attached to the unit load are orientated such that they lie in a plane.

7. Unit load according to either of Claims 5 and 6, **characterized in that** at least three devices (10) are adapted to the unit load or to at least one element of the unit load and are attached thereto in such a manner that the unit load does not penetrate the plane.

8. Unit load according to one of Claims 5 to 7, **characterized in that** at least three devices (10) are adapted to the unit load or to at least one element of the unit load and are attached thereto in such a manner that the centre of gravity of the unit load lies within an area defined by the container corners orientated on the planes.

9. Unit load according to one of Claims 5 to 8, **characterized in that** at least two of the devices (10) are connected to one another in each case by a strut (38).

10. Unit load according to Claim 9, **characterized in that** the strut (38) is detachably connected to the devices (10) by means of an additional attachment device (19).

11. Unit load according to one of the preceding Claims 5 to 10, **characterized in that** at least two of the devices (10) are adapted to the unit load or to at least one element of the unit load and are attached thereto in such a manner that the position of the container corners of the device (10) attached to the unit load corresponds to a set of dimensions which is standardized for container handling means.

12. Unit load according to one of the preceding Claims 5 to 11, **characterized by** at least one additional adaptor part with a support (32) on which at least two connecting elements (34), which are adapted in each case for gripping at the container corner, and two container corners are arranged, the position of which connecting elements with respect to each other corresponding to a set of dimensions which is standardized for container handling means, and further **characterized in that** the arrangement of the two connecting elements is adapted to the unit load or at least to elements of the unit load, including at least two of the devices (10) adapted and attached thereto, in such a manner that the container corners of the device (10) attached to the unit load can be gripped by the two connecting elements.

13. Unit load according to Claim 12, **characterized in that** at least one of the connecting elements (34) can be displaced on the support (32).

14. Unit load according to one of Claims 5 to 13, **characterized in that** at least four of the devices (10) each have a bay-shaped recess (22), and **in that** the at least four devices (10) are adapted to the unit load or at least to elements of the unit load and are attached thereto in such a manner that the recesses of the device (10) attached to the unit load are orientated such that the recesses cradle (without undercutting) two cylindrical clearances which are parallel to each other.

15. Unit load according to Claim 14, **characterized in that** the recesses (22) have first and second planar wall portions (24) which are arranged at an angle α to each other, and **in that** the at least four devices (10) are adapted to the unit load or at least to elements of the unit load and are attached thereto in such a manner that the first planar wall portions of all of the recesses, of which there are at least four, of the device (10) attached to the unit load are orientated such that they lie in a plane.

16. Unit load according to Claim 15, **characterized in that** α is a right angle.

17. Unit load according to one of Claims 5 to 16, **characterized in that** the unit load is a pipe section with a flange at each end of the pipe.

18. Transport vehicle for a unit load, the vehicle comprising a towing vehicle and a trailer which are connected to each other via the unit load during transportation of the unit load, the towing vehicle and trailer having mutually facing holding devices for the unit load, and on the unit load, in connecting regions between the unit load and towing vehicle, on the one hand, and unit load and trailer, on the other hand, at least two devices according to one of the preceding Claims 1 to 3 being attached in each case to the unit load, **characterized in that** the holding devices of the towing vehicle and of the trailer have container locks (container brackets)(42), and **in that** the arrangement of the container brackets (42) is adapted to the unit load or at least to elements of the unit load with devices (10) adapted and attached thereto, in such a manner that the container corners of the devices attached to the unit load can be gripped by the container brackets (42).

19. Transport vehicle according to Claim 18, **characterized in that** the container brackets (42) are mounted on telescopically adjustable portions of the holding device (40), and **in that** the height and/or the lateral position of the container brackets (42) can be set thereon.

20. Transport vehicle according to Claim 19, **characterized in that** the holding device (40) has two spars (2) which are arranged vertically and two cross pieces (4) which are arranged horizontally and are arranged in a vertical plane, and **in that** at each end of the lower cross piece and at the upper ends of the two spars one of the portions can be telescopically withdrawn and extended, with each portion having a container bracket (42) at its end.

21. Transport vehicle according to one of Claims 18 to 20, **characterized in that** the towing vehicle (102) and the trailer (104) have, at their mutually assigned ends, mutually corresponding connecting elements (110, 112, 114, 116, 118, 120), the arrangement of which is coordinated in such a manner that the towing vehicle (102) and the trailer (104) can be connected without the unit load in a manner such that they can be driven.

22. Transport vehicle according to Claim 21, **characterized in that** the connecting elements have spars (120, 112) which point horizontally in the direction of travel and come to rest one above the other in order to connect the towing vehicle (102) and the trailer (104).

23. Transport vehicle according to one of Claims 18 to 22, **characterized in that** at least parts of the holding devices (106, 108, 110, 112) at least partially form the connecting elements (110, 112).

24. Transport vehicle according to Claim 23, **characterized in that** the holding devices (106, 108) have container brackets (113).

25. Transport vehicle according to one of Claims 20 to 24, **characterized in that** the connecting elements have locking elements (116) for locking the connection.

26. Transport vehicle according to Claim 25, **characterized in that** the connecting elements have clamping elements (118) for clamping the towing vehicle (102) and the trailer (104) to each other.

## Revendications

1. Dispositif destiné à saisir une charge isolée, le dispositif comportant une partie de fixation pour fixer le dispositif contre la charge isolée et une partie de préhension pour saisir ladite charge par l'intermédiaire d'un moyen de manutention, **caractérisé en ce que** la partie de préhension (14) est conçue sous la forme d'un oeilleton d'arrimage, **en ce que** la partie de fixation (12) est adaptée à la forme d'une charge isolée (16) déterminée, **en ce que** la partie de fixation (12) comporte au moins un dispositif de fixation (20) qui est adapté à un dispositif d'assemblage déterminé au niveau de la charge isolée, **en ce que** la partie de fixation (12) comporte au moins deux forures (20) et **en ce que** la partie de fixation (12), y compris le diamètre des forures et la distance entre celles-ci, est adaptée à un dispositif d'assemblage déterminé au niveau de la charge isolée (16), lequel est muni d'une bride et comporte un type de forures déterminé.

2. Dispositif selon la revendication 1, **caractérisé en ce que** le dispositif de fixation (20) est formé par au moins deux forures et les forures, y compris leur diamètre et leur distance réciproque, sont adaptées au dispositif d'assemblage déterminé au niveau de la charge isolée.

3. Dispositif selon la revendication 1 ou 2, **caractérisé en ce que** le type de forures du dispositif de fixation est conçu en forme d'arc de cercle, en forme de cercle ou en forme de segment de cercle.

4. Dispositif selon l'une quelconque des revendications précédentes, **caractérisé par** des anneaux (26) dans la zone de la partie de fixation (12).

5. Charge isolée comportant au moins deux dispositifs selon l'une quelconque des revendications précédentes, fixés contre celle-ci, **caractérisée en ce que** les dispositifs (10) sont adaptés et fixés à la charge isolée ou au moins à des éléments de la charge isolée de telle sorte que, dans chaque cas, au moins deux oeilletons d'arrimage du dispositif (10) fixé contre la charge isolée sont orientés l'un vers l'autre parallèlement par leurs bords.

6. Charge isolée selon la revendication 5, **caractérisée en ce qu'**au moins trois des dispositifs (10) sont adaptés et fixés à la charge isolée ou au moins à des éléments de la charge isolée de telle sorte que, dans chaque cas, au moins trois oeilletons d'arrimage avec le dispositif (10) fixé contre la charge isolée sont alignés de telle sorte qu'ils sont situés dans un même plan.

7. Charge isolée selon la revendication 5 ou 6, **caractérisée en ce qu'**au moins trois dispositifs (10) sont adaptés et fixés à la charge isolée ou au moins à des éléments de la charge isolée de telle sorte que la charge isolée ne traverse pas le plan.

8. Charge isolée selon l'une quelconque des revendications 6 à 7, **caractérisée en ce qu'**au moins trois dispositifs (10) sont adaptés et fixés à la charge isolée ou au moins à des éléments de la charge isolée de telle sorte que le centre de gravité de la charge isolée se situe à l'intérieur d'une surface qui est projetée par les oeilletons d'arrimage orientés sur le plan.

9. Charge isolée selon l'une quelconque des revendications 5 à 6, **caractérisée en ce qu'**au moins deux des dispositifs (10) sont assemblés l'un à l'autre par l'intermédiaire d'une entretoise (38).

10. Charge isolée selon la revendication 9, **caractérisée en ce que** l'entretoise (38) est assemblée de manière amovible avec les dispositifs (10) par l'intermédiaire d'un dispositif de fixation (19) supplémentaire.

11. Charge isolée selon l'une quelconque des revendications 5 à 10, **caractérisée en ce qu'**au moins deux des dispositifs (10) sont adaptés et fixés à la charge isolée ou au moins à des éléments de la charge isolée de telle sorte que la position des oeilletons d'arrimage du dispositif (10) fixé contre la charge isolée correspond à un type de dimensions, qui est le type standard pour les moyens de manutention de conteneurs.

12. Charge isolée selon l'une quelconque des revendications 5 à 11, **caractérisée par** au moins une pièce d'adaptation supplémentaire avec un support (32), contre lequel sont agencés aux moins deux éléments d'assemblage (34), qui sont adaptés chacun pour saisir les oeilletons d'arrimage, ainsi que deux oeilletons d'arrimage, dont la position l'un par rapport à l'autre correspond à un type de dimensions qui est le type standard pour les moyens de manutention de conteneurs, et en outre **caractérisée en ce que** l'agencement des deux éléments d'assemblage est adapté à la charge isolée ou au moins aux éléments de la charge isolée, y compris au moins deux des dispositifs (10) adaptés et fixés à ceux-ci, de telle sorte que les oeilletons d'arrimage du dispositif (10) fixé contre la charge isolée sont accessibles pour les deux éléments d'assemblage.

13. Charge isolée selon la revendication 12, **caractérisée en ce qu'**au moins un des éléments d'assemblage est monté mobile contre le support (32).

14. Charge isolée selon l'une quelconque des revendications 5 à 13, **caractérisée en ce qu'**au moins quatre des dispositifs (10) comportent chacun un évidement (22) en forme de baie et **en ce que** lesdits au moins quatre dispositifs (10) sont adaptés et fixés à la charge isolée ou au moins à des éléments de la charge isolée de telle sorte que les évidements du dispositif (10) fixé contre la charge isolée sont orientés de telle sorte que les évidements s'engagent autour de deux espaces libres (sans contre-dépouille) cylindriques, parallèles l'un à l'autre.

15. Charge isolée selon la revendication 14, **caractérisée en ce que** les évidements (22) comportent des premières et deuxièmes parties de parois (24) planes, qui sont disposées selon un angle α l'une par rapport à l'autre et **en ce que** lesdits au moins quatre dispositifs (10) sont adaptés et fixés à la charge isolée ou au moins à des éléments de la charge isolée de telle sorte que les premières parties de paroi planes de tous lesdits au moins quatre évidements du dispositif (10) fixé contre la charge isolée sont orientées de telle sorte qu'elles sont situées dans un plan.

16. Charge isolée selon la revendication 15, **caractérisée en ce que** l'angle α est un angle droit.

17. Charge isolée selon l'une quelconque des revendications 5 à 16, **caractérisée en ce que** la charge isolée est un tronçon de tube avec une bride à chaque extrémité.

18. Véhicule de transport pour une charge isolée, le véhicule étant formé par une tractrice et une remorque, qui sont attelées l'une à l'autre par l'intermédiaire de la charge isolée pendant le transport de la charge isolée, la tractrice et la remorque comportant des dispositifs de retenue, orientés l'un vers l'autre, pour la charge isolée et au moins deux dispositifs selon l'une quelconque des revendications 1 à 3 étant fixés contre la charge isolée dans des zones d'assemblage entre la charge isolée et la tractrice, d'une part, et la charge isolée et la remorque, d'autre part, **caractérisé en ce que** les dispositifs de retenue de la tractrice et de la remorque comportent des boulons d'arrimage (taquets d'arrimage) (42) et **en ce que** l'agencement des taquets d'arrimage (42) est adapté à la charge isolée ou au moins à des éléments de la charge isolée munis de dispositifs (10) fixés contre ceux-ci, de telle sorte que les oeilletons d'arrimage des dispositifs fixés contre la charge isolée sont accessibles pour les taquets d'arrimage (42).

19. Véhicule de transport selon la revendication 18, **caractérisé en ce que** les taquets d'arrimage (42) sont fixés contre des segments télescopiques du dispositif de retenue (40) et **en ce que** la hauteur et/ou la position latérale des taquets d'arrimage (42) est réglable par lesdits segments.

20. Véhicule de transport selon la revendication 19, **caractérisé en ce que** le dispositif de retenue (40) comporte deux longerons (2) disposés verticalement et deux traverses (4) disposées horizontalement, lesquels sont situés dans un plan vertical et **en ce que**, au niveau de chaque extrémité de la traverse inférieure, ainsi qu'au niveau de l'extrémité supérieure des deux longerons, chacun des segments peut être extrait et rentré de manière télescopique avec respectivement un taquet d'arrimage (42) à l'extrémité du segment.

21. Véhicule de transport selon l'une quelconque des revendications 18 à 20, **caractérisé en ce que** la tractrice (102) et la remorque (104) comportent au niveau de leurs extrémités face à face des éléments d'attelage (110, 112, 114, 116, 118, 120) correspondants entre eux, dont l'agencement est défini de telle sorte que la tractrice (102) et la remorque (104) peuvent être attelées de manière mobile sans la charge isolée.

22. Véhicule de transport selon la revendication 21, **caractérisé en ce que** les éléments d'attelage comportent des longerons (120, 112) orientés horizontalement dans le sens de transport, lesquels viennent en appui l'un sur l'autre pour l'attelage de la tractrice (102) avec la remorque (104).

23. Véhicule de transport selon l'une quelconque des revendications 18 à 22, **caractérisé en ce qu'**au moins des parties des dispositifs de retenue (106, 108, 110, 112) forment au moins en partie les éléments d'attelage (110, 112).

24. Véhicule de transport selon la revendication 23, **caractérisé en ce que** les dispositifs de retenue (106, 108) comportent des taquets d'arrimage (113).

25. Véhicule de transport selon l'une quelconque des revendications 20 à 24, **caractérisé en ce que** les éléments d'attelage comportent des éléments de verrouillage (116) destinés à bloquer l'attelage.

26. Véhicule de transport selon la revendication 25, **caractérisé en ce que** les éléments d'attelage comportent des éléments de serrage (118) pour serrer la tractrice (102) et la remorque (104) l'une contre l'autre.
